(19) **Europäisches Patentamt**

**European Patent Office**

**Office européen des brevets**

(11) **EP 1 626 074 A1**

(12) **EUROPÄISCHE PATENTANMELDUNG**

(43) Veröffentlichungstag:
**15.02.2006 Patentblatt 2006/07**

(51) Int Cl.:
**C09J 7/02** (2006.01)

(21) Anmeldenummer: **05107098.5**

(22) Anmeldetag: **01.08.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **11.08.2004 DE 102004039097**

(71) Anmelder: **tesa AG**
**20253 Hamburg (DE)**

(72) Erfinder:
- **MÜSSIG, Bernhard**
  **21218, Seevetal (DE)**
- **NEUBERT, Ingo**
  **22850, Norderstedt (DE)**

(74) Vertreter: **Stubbe, Andreas**
**tesa AG,**
**Kst. 9500 - Bf. 645,**
**Quickbornstrasse 24**
**20253 Hamburg (DE)**

(54) **Handeinreissbares Abdeckklebeband für Fahrzeuge mit geringer Rückschrumpfneigung**

(57) Abdeckklebeband zum Lackieren von Fahrzeugen und Fahrzeugteilen aus einem Trägermaterial und einer darauf zumindest einseitig aufgebrachten Klebebeschichtung, dadurch gekennzeichnet, dass das Trägermaterial aus einem bahnförmigen PVC-Material besteht, wobei

- das PVC-Material aus mindestens zwei PVC-Homopolymeren mit unterschiedlichen K-Werten besteht,
- der K-Wert des Polymergemisches einen Mittelwert von 63 nicht überschreitet,
- die Zugkraft bei 1 % Dehnung mindestens 3 N/cm beträgt,
- die Reißkraft 12 bis 30 N/cm beträgt,

- die Reißdehnung im Bereich von 150 bis 300 % liegt,
- die Kraft bei einer Dehnung um 10 % nach 3 Minuten höchstens noch 25 % des Ursprungswert beträgt und
- die Kraft bei einer Dehnung um 50 % nach 3 Minuten höchstens noch 40 % des Ursprungswert beträgt.

EP 1 626 074 A1

**Beschreibung**

Die vorliegende Erfindung betrifft ein dehnbares selbstklebendes Abdeckband auf Basis von weichgemachter PVC-Trägerfolie zum Abdecken von Flächen vor dem Lackieren vorrangig für Fahrzeuge wie zum Beispiel Automobilen oder Teilen wie zum Beispiel Stoßfängern, Motorradtanks etc. im Lackierprozess. Das Abdeckklebeband dient zur Erzeugung von scharfen Lackkanten und ist aufgrund der geringen Rückschrumpfneigung (große Relaxationsneigung) der Trägerfolie besonders zur Anwendung auf stark gewölbten Oberflächen und zum Verkleben um sehr enge Kurven geeignet.

Selbstklebende Abdeckbänder einschließlich daraus geformter Schablonen, im Folgenden als Abdeckklebeband bezeichnet, müssen einige wesentliche Eigenschaften aufweisen, damit sie die besonderen an sie gestellten Anforderungen erfüllen.

Leichte Dehnbarkeit beim Kurvenkleben bei gleichzeitig hohem E-Modul im Bereich der Kräfte während des Abrollens oder der Applikation auf geraden Strecken, keinerlei beziehungsweise minimale Rückschrumpfneigung im verklebten Zustand sowie eine geringe Dicke sind wichtige Haupanforderungen, um eine scharfe und gleichmäßige Lackkante auf gewölbten Oberflächen erzeugen zu können sowie eine saubere Verklebung in Kurven zu ermöglichen. Um ein Schrumpfen der verstreckten Bereichen des Abdeckklebebandes, wie sie in den Außenbereichen bei Verklebungen um enge Kurven sowie bei der Applikation auf sphärischen Oberflächen entstehen, zu vermeiden, muss die Trägerfolie diese Spannungen innerhalb kurzer Zeit abbauen. Das setzt voraus, dass die Trägerfolie eine große Neigung zur Relaxation besitzt, das heißt, dass die Trägerfolie die Eigenschaft besitzt, innere Spannungen, die zum Beispiel durch eine Dehnung der Trägerfolie entstehen, zu einem großen Teil abzubauen.

Vom Verarbeiter ist ebenfalls eine leichte Handeinreißbarkeit bei der Applikation gewünscht, um eine schnelle und leichte Verarbeitbarkeit des Abdeckklebebandes zu erreichen, das heißt, dass ein Abreißen des Abdeckklebebandes ohne technische Hilfsmittel wie Scheren oder Messer sowie ohne großen Kraftaufwand möglich ist. Der Begriff Handeinreißbarkeit beinhaltet das Einreißen von der Seite mit zwei Händen zwischen Daumen und Zeigefinger als auch ruckartiges Abreißen in Längsrichtung. Die widersprüchlichen Anforderungen eines hohem E-Moduls sowie einer leichten Dehnbarkeit bei gleichzeitiger minimalen Schrumpfneigung und leichter Handeinreißbarkeit können mit der vorliegenden Erfindung gelöst werden.

Bisher werden für diese Anwendung üblicherweise Abdeckklebebänder bestehend aus einem Trägerfilm aus Papier, Polyester, Hart- oder Weich-PVC, Polyethylen oder Polypropylen verwendet.

Bei Verwendung von Papier oder orientierten Folien aus Polyester, Hart-PVC, Polyethylen oder Polypropylen ist die Dehnbarkeit hinsichtlich der Reißdehnung oder der aufzuwendenden Kraft zu gering, um den Ansprüchen bei hohen Verformungen, wie sie zum Beispiel bei der thermischen Behandlung von Kfz-Stoßfängern auftreten, zu genügen. Nicht gereckte Folien aus weichen Polyolefinen wie Polyethylen oder Propylencopolymeren oder Weich-PVC sind nicht handeinreißbar. Polyolefinfolien weisen nach Dehnung durch Kurvenverklebung auch einen Rückschrumpf auf.

Klebebänder auf Basis einer Weich-PVC-Folie werden zum Beispiel in GB 2 171 712 A beschrieben. Konventionelle Weich-PVC-Klebebänder enthalten einen Anteil von größer 37 Gew.-Teilen eines Monomerweichmachers auf Phthalatbasis auf 100 Gew.-Teilen PVC, bestehend aus üblicherweise einem Polymer mit einem K-Wert > 63. Diese Weich-PVC-Klebebänder haben üblicherweise eine zu hohe Reißkraft und Reißdehnung, so dass ein Abreißen des Abdeckklebebandes ohne technische Hilfsmittel wie Scheren oder Messer nur schwer möglich ist. Eine leichte Handeinreißbarkeit bei der Applikation ist aber vom Verarbeiter gewünscht.

Stand der Technik sind ebenfalls Abdeckklebebänder, die aus einem bahnförmigen PVC-Trägermaterial bestehen, das aus einem PVC-Polymeren mit einem K-Wert größer 63, üblicherweise 65 bis 80, sowie einem Gemisch aus Monomer und Polymerweichmacher mit einer Gesamenge von größer als 37 Gew.-Teilen auf 100 Gew.-Teilen PVC-Polymer bestehen. Diese Abdeckklebebänder lassen sich ebenfalls nur mit hohem Kraftaufwand abreißen. Dieses Verhalten spiegelt sich in einer Schlagzugzähigkeit größer 1100 kJ/m$^2$ und Reißdehnungen über 250 % wider. Diese Abdeckklebebänder sind aufgrund ihrer Rückschrumpfneigung für die Anwendung auf stark gekrümmten Oberflächen und bei Verklebungen um Kurven mit einem engen Radius nicht geeignet. Die Rückschrumpfneigung ist auf die unzureichende Relaxation von größer 35 % des Abdeckklebebandes zurückzuführen. Bei erhöhten Temperaturen im Einbrennprozess des Lackes wird dadurch ein Lösen des Abdeckklebebandes aus Vertiefungen und Sicken sowie Abheben von gedehnten Kanten in Kurven beobachtet. Das führt zu Farbunterläufern und unsauberen Lackkanten.

Aus DE 101 51 818 A1 ist selbstklebendes Abdeckklebeband für Fahrzeuge und Fahrzeugteile aus einem Trägermaterial und einer darauf zumindest einseitig aufgebrachten Klebebeschichtung bekannt, wobei das Trägermaterial aus einem bahnförmigen Material besteht, das folgende Eigenschaften aufweist:

- eine Zugkraft längs bei 1 % Dehnung von mindestens 4,5 N/cm,
- eine Kraft längs bei einer Dehnungen von 10 % und 150 % von 12 bis 28 N/cm,
- eine Reißkraft längs von 12 bis 30 N/cm sowie
- eine Reißdehnung längs im Bereich von 150 % bis 300 %.

Aufgabe der Erfindung ist es, ein selbstklebendes Abdeckklebeband mit einem Trägermaterial auf PVC-Basis zur Verfügung zu stellen, wobei das Trägermaterial eine leichte Dehnbarkeit bei gleichzeitiger geringer Rückschrumpfneigung und einer leichten Handeinreißbarkeit aufweist. In der bevorzugten Ausführung wird die Dehnbarkeit in Betrag und Charakter so eingestellt, dass neben einer leichten Verformbarkeit und Kurvenklebbarkeit auch noch eine geringe Dehnung bei der Applikation des Klebebandes erzielt wird.

Für den Fachmann überraschend und nicht vorhersehbar ist ein Abdeckklebeband mit einem PVC-Träger, auf den zumindest einseitig eine Klebebeschichtung aufgebracht ist, der aus mindestens zwei PVC-Homopolymeren mit unterschiedlichen K-Werten besteht und der die folgenden Eigenschaften aufweist

- der K-Wert des Polymergemisches überschreitet nicht einen Mittelwert von 63,
- die Zugkraft beträgt bei 1 % Dehnung mindestens 3 N/cm,
- die Reißkraft beträgt 12 bis 30 N/cm,
- die Reißdehnung liegt im Bereich von 150 bis 300 %,
- die Kraft beträgt bei einer Dehnung um 10 % nach 3 Minuten höchstens noch 25 % des Ursprungswert und
- die Kraft beträgt bei einer Dehnung um 50 % nach 3 Minuten höchstens noch 40 % des Ursprungswert,

in der Lage, die widersprüchlichen Anforderungen nach leichter Dehnbarkeit und geringen Rückschrumpfneigung sowie leichter Handeinreißbarkeit zu erfüllen.

Die charakteristische Eigenschaft des Trägermaterials im Sinne der vorliegenden Erfindung ist die ausgeprägte Neigung zur Relaxation beziehungsweise die geringe Neigung zum Rückschrumpf, die eine problemlose Anwendung auf stark sphärischen Oberflächen wie zum Beispiel Stoßfängern sowie eine Verklebung um enge Kurven erlauben und die eine leichte Handeinreißbarkeit ermöglicht, die dem Verarbeiter ein Abzureißen ohne hohen Kraftaufwand beziehungsweise ohne Zuhilfenahme von Hilfsmittel wie Schere oder Messer bei der Applikation erlaubt. Dadurch ergibt sich eine erhebliche Zeitersparnis im Verarbeitungsprozess.

Als Maß für die Rückschrumpfneigung kann die Relaxation verwendet werden. Hierbei wird das Abdeckklebeband um 10 beziehungsweise 50 % gedehnt und anschließend bei konstant gehaltener Dehnung die Restkraft nach 3 Minuten ermittelt und in % der ursprünglichen Kraft angegeben. Die Reißdehnung, Höchstzugkraft sowie Schlagzugzähigkeit dienen ebenso zur Charakterisierung im Speziellen der Handeinreißbarkeit des Abdeckklebebandes.

Um eine minimale Schrumpfneigung auch von verdehnten Bereichen bei der Anwendung zu gewährleisten, muss das Abdeckklebeband eine hohe Relaxationsneigung aufweisen. Dehnungen von über 50 % in den äußeren Randbereichen des Abdeckklebebandes bei der Verklebung um enge Kurven sind durchaus keine Seltenheit. Die dadurch auftretenden Spannungen müssen innerhalb kurzer Zeit abgebaut werden (relaxieren), um ein Schrumpfen und dadurch unsaubere beziehungsweise ungleichmäßige Lackkanten zu vermeiden.

Damit eine leichte Handeinreißbarkeit des erfindungsgemäßen Abdeckklebebandes gewährleistet ist, sollten vorzugsweise die Reißdehnung im Bereich von 150 bis 300 %, vorzugsweise 180 bis 250 %, und die Reißkraft längs im Bereich von 12 bis 30 N/cm liegen.

Die Eigenschaft der Handeinreißbarkeit spiegelt sich besonders in der Schlagzugzähigkeit (DIN 53453, ISO/R 179) wider, demnach sollten die Folien vorzugsweise einen Wert kleiner 1000 kJ/m$^2$, vorzugsweise kleiner 700 kJ/m$^2$, längs zur Maschinenrichtung haben.

Bei Dehnung des Klebebandes sollte vorzugsweise eine Kraft von 30 N/cm nicht überschritten werden, um eine faltenfreie Kurvenverklebung der Abdeckklebebänder und eine plane Verklebung auf sphärischen Untergründen zu ermöglichen und Ablösungserscheinungen durch Schrumpfkräfte zu vermeiden. Eine Reißdehnung im Bereich von 12 bis 30 N/cm hat sich als günstig herausgestellt. Ein seitliches Einschnüren (Necking) bei dem erfindungsgemäßen Abdeckklebeband wird im Gegensatz zu den Polyolefinklebebändern nicht beobachtet. Für die Kraft längs bei 1% Dehnung (F1%-Wert) ist ein Mindestwert von 3 N/cm, vorzugsweise größer 5,5 N/cm, anzustreben, um beim Abrollen und Verkleben und im Speziellen bei der automatisierten Applikation eine Verdehnung des Abdeckbandes zu verhindern.

Des Weiteren erfordert die Trocknung beziehungsweise Aushärtung der frischlackierten Oberflächen eine thermische Behandlung von bis zu 45 Minuten, die je nach verwendeten Lacktyp bei Temperaturen von 110 °C bis 160 °C liegt. Auch nach einer thermischen Belastung von 160 °C ist das erfindungsgemäße Abdeckklebeband in speziellen Ausführungsformen rückstandsfrei von der Lackoberfläche ablösbar.

Als PVC-Rohstoffe für die Folien eignen sich Emulsions-, Masse- und insbesondere Suspensions-PVC. Das Relaxationsverhalten sowie die Handeinreißbarkeit sind begünstigt, wenn die Molekulargewichtsverteilung sehr breit und der durchschnittliche K-Wert (DIN 53726, ISO 174) des PVCs einen Wert von 63 nicht überschreitet. Die breite Molekulargewichtsverteilung und der durchschnittliche K-Wert werden vorzugsweise durch Mischung aus mindestens einem Standard-PVC (K-Wert zum Beispiel 65 oder 70) und einem Spezialtyp (zum Beispiel 50 oder 58) hergestellt. Bei dem erfindungsgemäßen Abdeckklebeband wird ein PVC-Polymergemisch aus vorzugsweise 80 bis 50 Gew.-Teile eines Standard-PVCs und 20 bis 50 Gew.-Teile eines PVCs mit einem K-Wert < 60 zu einem mittleren K-Wert kleiner 63 kombiniert, um das spezielle Relaxationsverhalten bei gleichzeitiger leichten Handeinreißbarkeit und hohem E-Modul einzustellen. Standard-Suspensions-PVC-Polymere mit einem mittleren K-Wert sind zum Beispiel Solvin 264PC, Solvin 271GA (Solvin GmbH) oder Vinnolit H65DS, Vinnolit S 4170 (Vinnolit Kunststoff GmbH). Spezial-PVC-Polymere mit einem K-Wert < 60 sind zum Beispiel Solvin 250SB (Solvin GmbH) und Vinnolit S3050 (Vinnolit Kunststoff GmbH).

Um Rückstände auf den frisch lackierten Oberflächen nach dem Demaskieren des Abdeckklebebandes sowie eine Migration des Weichmachers in die Klebmasse zu verhindern, werden vorzugsweise Polymerweichmacher verwendet. Es handelt es sich dabei zum Beispiel um Polyester auf Basis von zum Beispiel Adipin-, Sebacin-, Azelain- oder Phthalsäure. Eine Beschreibung von Weichmachern ist zum Beispiel im Kunststoff-Handbuch - Polyvinylchlorid 2/1 (2.) Hanser Verlag Kapitel 6.7 zu finden.

In der vorliegenden Erfindung haben sich besonders Weichmacher auf Basis von Polyadipatestern zum Beispiel Palamoll 652 (BASF) oder Uraplast RA 19 (DSM) als geeignet erwiesen. Zur Optimierung der Eigenschaften, insbesondere des Kraft-Dehnungs-Verhaltens der Trägerfolie des erfindungsgemäßen Abdeckklebebandes, werden vorzugsweise 25 bis 37 Gew.-Teile, insbesondere 30 bis 33 Gew.-Teile eines oder mehrerer Polymerweichmacher auf 100 Gew.-Teilen PVC-Polymer verwendet.

Bei der zusätzlichen Verwendung von Monomerweichmachern wie zum Beispiel Phthalsäure- oder Trimillitsäureestern kann aufgrund ihrer leichten Migration eine Tendenz zur Belags- und Rückstandbildung nicht ausgeschlossen werden, der Anteil sollte daher kleiner als 4 Gew.-Teile, vorzugsweise kleiner als 1 Gew.-Teil auf 100 Gew.-Teilen PVC-Polymer sein. Bei unter 25 Gew.-Teilen Polymerweichmacher sind die Folien wenig dehnbar und spröde und oberhalb von 37 Gew.-Teilen Polymerweichmacher schwerer handeinreißbar und im F1%-Wert zu niedrig.

Der Zusatz von Stabilisatoren ist anzuraten, um eine thermische Schädigung der PVC-Folien bei der Verarbeitung und Anwendung zu vermeiden. Die Funktion der Stabilisatoren besteht vorrangig in der Vermeidung von Versprödung und Verfärbung der PVC-Trägerfolie während des Herstellungs- und Verarbeitungsprozesses und der späteren Verwendung. Derartige Stabilisatoren sind zum Beispiel in Plastics Additives Handbook (5. Ed.) Hanser Verlag, Kapitel 3 und in dem Kunststoff-Handbuch - Polyvinylchlorid 2/1 (2.) Hanser Verlag Kapitel 6.3 beschrieben.

Insbesondere Stabilisatoren auf Basis von Barium/Zink-, Calcium/Zink- oder ZinnVerbindungen sind für das erfindungsgemäße Abdeckklebeband geeignet. Die Verwendung von Blei oder Cadmium haltigen Stabilisatoren ist ebenfalls möglich, sollte aber aus toxikologischen und Umweltaspekten eher vermieden werden. Der Gehalt an Stabilisator beträgt zum Beispiel 2 bis 5 Gew.-Teile bezogen auf 100 Gew.-Teilen PVC-Polymer. Die Verwendung von zusätzlich 1 bis 4 Gew.-Teilen epoxidierten Naturölen zum Beispiel epoxidiertes Sojabohnenöl als Costabilisator ist möglich, aber wegen der Migrationsneigung analog den Monomerweichmachern eher zu vermeiden.

Weitere bei PVC-Folien übliche Additive wie Füllstoffe, Pigmente, Impactmodifier oder Gleitmittel und Verarbeitungshilfsmittel (zum Beispiel Paraloid K 120 ND, Rohm & Haas) können zur Herstellung der Trägerfolie des erfindungsgemäßen Abdeckklebebandes verwendet werden. Beispiele für Füllstoffe sind Calciumcarbonat (Kreide, Marmor), Kaolin und Kieselsäure. Ihre Funktion ist die Einstellung von Verarbeitungseigenschaften, mechanischen Daten der Folie oder Kosten. Nicht oder nur von untergeordneter Bedeutung ist die Einstellung der Handeinreißbarkeit. Zur Optimierung der Folieneigenschaften können zusätzlich PVC-verträgliche Polymere wie zum Beispiel chloriertes PVC, Nitril-Butdien-Kautschuk (NBR mit hohen AN-Gehalt), Polyurethan (zum Beispiel Baymod PU, Bayer) und Ethylen-Vinylacetat-Copolymere (EVM mit hohen VA-Gehalt, gegebenenfalls als Terpolymer mit Kohlenmonoxid) verwendet werden. Übliche Additive werden im Kunststoff-Handbuch - Polyvinylchlorid 2/1 (2.) Hanser Verlag Kapitel 6 beschrieben.

Das erfindungsgemäße Abdeckklebeband kann als weiteres Additiv ein vernetztes Polymer zum Beispiel Vinnolit K 221 (Vinnolit Kunststoff GmbH) oder eine unvernetzen mit PVC unverträgliches Polymer zum Beispiel Coathylene LD 2477 (Herberts Polymer Powders AG) oder Styroflex BX 6105 (BASF) enthalten.

Die Herstellung der Trägerfolie erfolgt bevorzugt auf einem Kalander. Eine Prägung der Folie ist zur Einstellung der Abrollkraft möglich.

Das PVC-Trägermaterial wird einseitig mit einer Klebebeschichtung versehen. Als Kleberbeschichtung für das Abdeckklebeband eignen sich insbesondere Polyisopren-, Polyisobutylen- und Acrylatklebemassen. Eine Vernetzung ist vorteilhaft für die Verbesserung der Wiederabziehbarkeit des Abdeckklebebandes nach der Anwendung und kann thermisch oder durch Bestrahlung mit UV-Licht oder Elektronenstrahlen erfolgen. Um eine ausreichende Haftung aber auch eine leichte Abrollbarkeit sowie eine Wiederablösbarkeit nach der Anwendung zu gewährleisten, sollte die Klebkraft auf Stahl im Bereich von 2,0 bis 4,8 N/cm liegen. Gegebenenfalls können rückseitig ein Trennlack zur Verbesserung der Abrollbarkeit aufgebracht werden. Vorteilhaft ist die Verwendung einer Primerschicht zwischen Trägerfolie und Klebmasse zur Verbesserung der Haftung der Klebmasse auf der Folie und somit der rückstandsfreien Wiederabziehbarkeit nach der Anwendung. Beschreibungen der üblicherweise für Abdeckklebebänder verwendeten Klebmassen sowie Trennlacken und Primern finden sich zum Beispiel in Handbook of Pressure Sensitive Adhesive Technology, D. Satas, (3. Auflage).

Das erfindungsgemäße Abdeckklebeband kann ebenfalls für spezielle Anwendungen, bei den eine erhöhte Reißfestigkeit benötigt wird wie zum Beispiel zum Maskieren von Fensterflanschen während des Lackierprozesses, vor der Applikation mit einem weiteren Klebeband zum Beispiel aus einem Polyesterträgermaterial zusammenlaminiert werden.

**Prüfmethoden**

Das Zugdehnungsverhalten des Abdeckklebebandes wird an Prüflingen vom Typ 2 (15 cm breiten und 150 cm langen Prüfstreifen, Einspannlänge 100 mm) nach DIN EN ISO 527-3/2/300 mit einer Prüfgeschwindigkeit von 300 mm/min ermittelt. Die Messungen werden bei einem Prüfklima von 23 ± 1 °C und 50 ± 5 % rel. Luftfeuchte durchgeführt.
Die Zugkraft bei 1% Dehnung (F1%-Wert) wird an einem 15 mm breiten und 150 mm langen Prüfstreifen (Einspannlänge 100 mm) entsprechend DIN EN ISO 527-3/2/10 mit einer Prüfgeschwindigkeit von 10 mm/min bei einem Prüfklima von 23 ± 1 °C und 50 ± 5 % rel. Luftfeuchte ermittelt.
Die verbleibende Kraft bei einer Dehnung auf 10 beziehungsweise 50 % nach 3 Minuten (Relaxtionsverhalten) wird bestimmt, indem ein 15 mm breiter und 150 mm langer Prüfstreifen (Einspannlänge 100 mm) in einem Zugspannungsmessgerät auf 110 beziehungsweise 150 % der Ausgangslänge gedehnt und anschließend bei konstanter Dehnung die verbleibende Kraft ermittelt wird. Als Maß für das Relaxionsverhalten wird die Kraft nach 3 Minuten in Prozent vom Ausgangskraftwert bei 10 beziehungsweise 50 % Dehnung angegeben. Die Messungen werden bei einem Prüfklima von 23 ± 1 °C und 50 ± 5 % rel. Luftfeuchte durchgeführt.
Zur Bestimmung der Temperaturbeständigkeit sowie Rückständen nach der Applikation werden 15 mm breite Abdeckklebebänder auf einem mit Kunstharz-Prüflack (Schwarzlack, BASF) lackierten Blech verklebt und anschließend bei 150 beziehungsweise 160 °C für eine Stunde gelagert. Nach anschließender Temperierung auf 25 beziehungsweise 60 °C wird das Abdeckklebeband bei diesen Temperaturen in einem Winkel von 180° von der Lackoberfläche abgezogen. Anschließend erfolgt die visuelle Beurteilung der Rückstände auf der Lackoberfläche nach folgenden Kriterien:

(++) keinerlei Rückstände und Ghosting
(+) leichtes Ghosting
(-) Ghosting oder Rückstände
(--) starke Masserückstande oder Umspulen der Masse

Die Lackhaftung sowie die Qualität der Lackkante werden geprüft, indem ein Metallblech, das stellenweise mit dem Abdeckklebeband maskiert ist, lackiert wird. Der Lack darf im Lackierprozess nicht von der Klebebandoberfläche abperlen. Nach Trocknung der Lackschicht und anschließendem Abziehen des Abdeckklebebandes darf das Klebeband nicht reißen sowie die auf ihm haftende Lackschicht auch beim Biegen und Knicken nicht abplatzen. Anschließend erfolgt die Beurteilung der Qualität der Lackkante.
Zur Untersuchung des Schrumpfverhaltens der Abdeckbänder werden Prüfstreifen von 20 cm Länge auf einen Prüfgrund (lackiertes Blech) verklebt, an den Enden mit einem Klebeband fixiert, in der Streifenmitte durchgeschnitten und 30 min. bei 130 °C gelagert. Der dabei auftretende Spalt wird ermittelt und in % der Ausgangslänge als Maß des Schrumpfes angegeben.
Die Schlagzugzähigkeit des Abdeckklebebandes wird entsprechend DIN EN ISO 8256 bei einem Prüfklima von 23 ± 1 °C und 50 ± 5 % rel. Luftfeuchte an Proben der Abmaße 15 mm Breite und 27 mm Länge bestimmt. Bei der Schlagzugzähigkeit längs werden die Prüflinge parallel zur Maschinenrichtung geschnitten und der Rissverlauf erfolgt demzufolge quer zur Maschinenrichtung. Es wird jeweils das arithmetische Mittel aus 10 Messungen angegeben. Die Schlagzugzähigkeit berechnet sich gemäß DIN EN ISO 8256 nach:

$$E = E_c / (x * d) * 1000$$

E    Schlagzugzähigkeit
$E_c$    Schlagarbeit
x    Probenbreite
d    Probendicke.

Die Klebkräfte werden bei einem Abzugswinkel von 180° nach AFERA 4001 an 15 mm breiten Teststreifen bei einem Prüfklima von 23 ± 1 °C und 50 ± 5 % rel. Luftfeuchte bestimmt. Hierbei werden Stahlplatten als Prüfuntergrund verwendet.
Im Folgenden soll die Erfindung anhand mehrerer Beispiele näher erläutert werden, ohne dass mit diesen die Erfindung in irgendeiner Weise beschränken zu wollen.
Weiterhin sind Vergleichsbeispiele angegeben, die die hervorragenden Eigenschaften des erfindungsgemäßen Abdeckbandes unterstreichen.

**Beispiele**

**Beispiel 1**

Zur Herstellung des Trägerfilmes wird zunächst in einem schnelldrehenden Mischer ein Dryblend aus 50 Gew.-Teilen Solvin 258 RF (Solvin, S-PVC, K-Wert 58), 50 Gew.-Teilen Solvin 264 PC (Solvin, S-PVC, K-Wert 64), 30 Gew.-Teilen Palatinol 652 (BASF), 1,5 Gew.-Teilen Palatinol N (BASF), 20 Gew.-Teilen Omya EHX1 (Omya), 4 Gew.-Teilen Baerostab UBZ 639 (Baerlocher), 2 Gew.-Teilen Baerostab LSA (Baerlocher), 1,5 Gew.-Teilen Paraloid K 120 (Rohm und Haas) hergestellt.

Der Dryblend wird anschließend in einem Extruder plastifiziert und mit Hilfe eines Kalanders zu einem Film mit einer Breite von 2500 mm und einer Dicke von 0,08 mm ausgeformt. Der Trägerfilm wird mit einer Haftvermittlerschicht bestehend aus einer Lösung aus 1 Gew.-Teil Naturkautschuk und 1 Gew.-Teil Nitrilkautschuk in Toluol mit einem Auftragsgewicht von 0,6 g/m$^2$ beschichtet und getrocknet. Die Klebmassenbeschichtung wird direkt auf die Haftvermittlerschicht mittels Kommarakel mit einem Auftragsgewicht von 25 g/m$^2$ aufgetragen. Die Klebmasse besteht aus einer Lösung einer Naturkautschukklebemasse in Benzin mit einem Feststoffgehalt von 30 Gewichtsprozent. Diese besteht aus 50 Gew.-Teilen Naturkautschuk, 10 Gew.-Teilen Zinkoxid, 3 Gew.-Teilen Kolophoniumharz, 6 Gew.-Teilen Alkylphenolharz, 17 Gew.-Teilen Terpenphenolharz, 12 Gew.-Teilen Poly-β-Pinenharz und 2 Gew.-Teilen mineralisches Öl. Die Trocknung des Nachstriches erfolgt im Trockenkanal bei 70 °C.

Die selbstklebende Oberflächenschutzfolie lässt sich ohne sichtbare Dehnung abwickeln und beim Gebrauch zum Maskieren von Automobilteilen auch schwierigen Geometrien applizieren. Eine gleichmäßige Verklebung um enge Kurven ist faltenfrei und ohne abheben der Randbereiche möglich. In gedehnten Randbereichen wird ein minimaler Schrumpf beobachtet. Das Abreißen von Hand erfordert einen gewissen Kraftaufwand, was sich in einem erhöhten Wert für die Schlagzugzähigkeit widerspiegelt. Nach dem Gebrauch (Lackierprozess) lässt sich das Abdeckklebeband problemlos und ohne Abrisse vom Verklebungsuntergrund abziehen und ergibt eine sehr scharfe und gleichmäßige Lackkante. Bei der Verwendung von höheren Lack-Einbrenntemperaturen (> 140 °C) werden leichte Beläge (Ghosting) auf der Lackoberfläche beobachten.

**Beispiel 2**

Analog dem Beispiel 1 wird eine entsprechend hergestellte Trägerfolie, in der jedoch in einem schnelldrehenden Mischer ein Dryblend aus 80 Gew.-Teilen Solvin 264 PC (Solvin, S-PVC, K-Wert 64), 20 Gew.-Teilen Solvin 250 SB (Solvin, S-PVC, K-Wert 50), 31 Gew.-Teilen Palatinol 652 (BASF), 20 Gew.-Teilen Omya EHX1 (Omya), 4 Gew.-Teilen Baerostab UBZ 639 (Baerlocher), 1,5 Gew.-Teilen Paroloid K 120 (Rohm und Haas) hergestellt wird, mit Haftvermittlerschicht sowie Klebmasse beschichtet.

Die selbstklebende Oberflächenschutzfolie lässt sich faltenfrei abwickeln und beim Gebrauch zum Maskieren von Automobilteilen auch schwierigen Geometrien einwandfrei applizieren. Durch das niedrigere Zugkraftplateau bei Dehnungen zwischen 10 und 150 % ist eine besonders gute Anschmiegsamkeit an gewölbte Oberflächen sowie Kurvenklebbarkeit gewährleistet. Es zeichnet sich durch ein ausgezeichnetes Relaxationsverhalten aus. Das Abdeckklebeband lässt sich dadurch auch um sehr enge Kurven verkleben, es kommt im anschließenden Einbrennprozess des Lackes nicht zum Schrumpfen in den gedehnten bereichen. Nach dem Gebrauch (Lackierprozess) lässt sich das Abdeckklebeband problemlos und ohne Abrisse rückstandsfrei vom Verklebungsuntergrund abziehen und ergibt eine sehr scharfe und gleichmäßige Lackkante.

**Beispiel 3**

Analog dem Beispiel 1 wird eine entsprechend hergestellte Trägerfolie, in der jedoch in einem schnelldrehenden Mischer ein Dryblend aus 80 Gew.-Teilen Solvin 264 PC (Solvin, S-PVC, K-Wert 64), 20 Gew.-Teilen Solvin 250 SB (Solvin, S-PVC, K-Wert 50), 4 Gew.-Teilen Vinnolit K 221 (vernetztes PVC-Mattierungsmittel von Vinnolit), 31 Gew.-Teilen Palatinol 652 (BASF), 20 Gew.-Teilen Omya EHX1 (Omya), 4 Gew.-Teilen Baerostab UBZ 639 (Baerlocher), 1,5 Gew.-Teilen Paroloid K 120 (Rohm und Haas) hergestellt wird, mit Haftvermittlerschicht sowie Klebmasse beschichtet.

Die selbstklebende Oberflächenschutzfolie hat ein Eigenschaftsprofil analog dem Beispiel 2. Es zeichnet sich zusätzlich durch eine besonders leichte Handeinreißbarkeit aus, ohne dass im gleichen Maße die mechanischen Eigenschaften negativ beeinflusst werden. Die leichte Seiteneinreißen von Hand spiegelt sich in einer niedrigen Schlagzugzähigkeit wider.

**Beispiel 4**

Ein Trägerfilm analog dem Beispiel 3 wird mit einer Haftvermittlerschicht bestehend aus einer Lösung aus Desmolac (Bayer) in Toluol mit einem Auftragsgewicht von 0,6 g/m$^2$ beschichtet und getrocknet. Die Klebmassenbeschichtung wird direkt auf die Haftvermittlerschicht mittels Kommarakel mit einem Auftragsgewicht von 25 g/m$^2$ aufgetragen. Die Klebmasse besteht aus einer Lösung einer Acrylatklebemasse in Toluol mit einem Feststoffgehalt von 40 Gewichtsprozent. Diese besteht aus 0,3 Gew.-Teilen Isocyanat sowie einem Copolymer aus 90 Gew.-Teilen n-Butylacrylat und 10 Gew.-Teilen Hydroxyethylacrylat. Die Trocknung des Nachstriches erfolgt im Trockenkanal bei 70 °C.

Die selbstklebende Oberflächenschutzfolie zeichnet sich durch Eigenschaften analoge dem Beispiel 2 aus. Jedoch ist die Verwendung von höheren Lack-Einbrenntemperaturen bis 170 °C möglich. Es werden keinerlei Beläge (Ghosting) und Rückstände auf der Lackoberfläche beobachten.

Vergleich der Eigenschaften der Beispiele:

|  | *Beispiel 1* | *Beispiel 2* | *Beispiel 3* | *Beispiel 4* |
|---|---|---|---|---|
| Dicke [mm] | 0,08 | 0,9 | 0,095 | 0,095 |
| Reißkraft md* [N/cm] | 15 | 20 | 18 | 18 |
| Reißdehnung md* [%] | 178 | 235 | 218 | 218 |
| Kraft bei 1% md* [N/cm] | 4,7 | 5,1 | 5,9 | 5,9 |
| %-Kraft$_{max}$ bei 10 % nach 3 min | 23 | 21 | 22 | 22 |
| %-Kraft$_{max}$ bei 50 % nach 3 min | 34 | 32 | 33 | 33 |
| Temperaturbeständigkei t bei 150 °C | + | ++ | ++ | ++ |
| Klebkraft Stahl [N/cm] | 2,9 | 3,1 | 2,8 | 2,2 |
| Handeinreißbarkeit | + | ++ | ++ | ++ |
| Schlagzugzähigkeit md/cd* [kJ/m$^2$] | 645/593 | 685/623 | 356/263 | 356/263 |
| * md Maschinenrichtung; cd quer zur Maschinenrichtung | | | | |

**Vergleichsbeispiel 1**

Analog Beispiel 1 wird eine Trägerfolie bestehend aus 100 Gew.-Teilen Vinnolit H 65 D (Vinnolit, S-PVC, K-Wert 65), 40 Gew.-Teilen Palamoll AH (BASF), 10 Gew.-Teilen Omya EHX1 (Omya), 4 Gew.-Teilen Baerostab UBZ 639 (Baerlocher), 3 Gew.-Teilen Baerostab LSA (Baerlocher) hergestellt und mit Haftvermittlerschicht sowie Klebmasse beschichtet.

Das Abdeckklebeband wird beim Gebrauch erheblich verstreckt, so dass ein erhebliche Schrumpfneigung bei erhöhten Temperaturen beobachtet wird. Ein Abreißen von Hand ist nur mit sehr hohem Kraftaufwand möglich. Des Weiteren lässt es sich nach dem Gebrauch (Lackierprozess) nicht rückstandsfrei vom Verklebungsuntergrund abziehen. Es wird vollflächiges Umspulen der Klebmasse beobachtet.

**Vergleichsbeispiel 2**

Analog Beispiel 1 wird eine Trägerfolie bestehend aus 100 Gew.-Teilen Solvin 265 PC (Solvin, S-PVC, K-Wert 65), 32 Gew.-Teilen Palamoll 652 (BASF), 20 Gew.-Teilen Omya EHX1 (Omya), 4 Gew.-Teilen Mark 17 M (Akcros Chem.), 2 Gew.-Teile Baerostab LSA (Baerlocher), 1,5 Gew.-Teilen Paroloid K 120 (Rohm und Haas) hergestellt und mit Haftvermittlerschicht sowie Klebmasse beschichtet.

Dieses Abdeckklebeband lässt sich bei Gebrauch einwandfrei applizieren und zeigt eine gute Kurvenklebbarkeit. Beim Einbrennen des Lackes wird allerdings ein erheblicher Schrumpf in den verstreckten Bereichen des Abdeckklebebandes beobachtet, was zu unsauberen Lackkanten und Masseresten führt. Die Verarbeitung ist ebenfalls erschwert, da das Abreißen von Hand nur mit einem erhöhtem Kraftaufwand möglich ist. Dieses Verhalten zeigt sich in erhöhten Werten der Restkraft nach einer Dehnung von 10 beziehungsweise 50 %, Schlagzugzähigkeit sowie der Reißdehnung.

**Vergleichsbeispiel 3**

Analog Beispiel 1 wird eine Trägerfolie bestehend aus 100 Gew.-Teilen Solvin 258 RF (Solvin, S-PVC, K-Wert 58), 30 Gew.-Teilen Palatinol 652 (BASF), 1,5 Gew.-Teilen Palatinol N (BASF), 20 Gew.-Teilen Omya EHX1 (Omya), 4 Gew.-Teilen Baerostab UBZ 639 (Baerlocher), 2 Gew.-Teilen Baerostab LSA (Baerlocher), 1,5 Gew.-Teilen Paroloid K 120 (Rohm und Haas) hergestellt und mit Haftvermittlerschicht sowie Klebmasse beschichtet.

Dieses Abdeckklebeband lässt sich bei Gebrauch zeigt eine gute Kurvenklebbarkeit. Es neigt nicht zum schrumpfen. Die Verarbeitung ist jedoch erschwert, da die Reißfestigkeit und Reißdehnung geringe Werte aufweist. Speziell bei der automatischen Applikation werden verstärkt Abrisse beobachtet. Ebenso kommt es zum Reißen beim Abziehen des Abdeckklebebandes von den Lackoberflächen nach dem Gebrauch.

Vergleich der Eigenschaften der Vergleichsbeispiele:

| | Vergleichsbeispiel1 1 | Vergleichsbeispiel 2 | VergleichsBeispiel 3 |
|---|---|---|---|
| Dicke [mm] | 0,1 | 0,08 | 0,09 |
| Reißkraft md* [N/cm] | 36 | 30 | 18 |
| Reißdehnung md* [%] | 335 | 280 | 148 |
| Kraft bei 1% md* [N/cm] | 1,3 | 3,9 | 4,1 |
| %-Kraft$_{max}$ bei 10 % nach 3 min | 33 | 29 | 24 |
| %-Kraft$_{max}$ bei 50 % nach 3 min | 43 | 41 | 39 |
| Temperaturbeständigkeit bei 150 °C | -- Umspulen | + | + |
| Klebkraft Stahl [N/cm] | 1,1 | 2,9 | 3,0 |
| Handeinreißbarkeit | -- | - | - |
| Schlagzugzähigkeit md/cd* [kJ/m$^2$] | 2265/1930 | 1240/1159 | 864/714 |
| * md Maschinenrichtung; cd quer zur Maschinenrichtung | | | |

**Patentansprüche**

1. Abdeckklebeband zum Lackieren von Fahrzeugen und Fahrzeugteilen aus einem Trägermaterial und einer darauf zumindest einseitig aufgebrachten Klebebeschichtung, **dadurch gekennzeichnet, dass** das Trägermaterial aus einem bahnförmigen PVC-Material besteht, wobei

    - das PVC-Material aus mindestens zwei PVC-Homopolymeren mit unterschiedlichen K-Werten besteht,
    - der K-Wert des Polymergemisches einen Mittelwert von 63 nicht überschreitet,
    - die Zugkraft bei 1 % Dehnung mindestens 3 N/cm beträgt,
    - die Reißkraft 12 bis 30 N/cm beträgt,
    - die Reißdehnung im Bereich von 150 bis 300 % liegt,
    - die Kraft bei einer Dehnung um 10 % nach 3 Minuten höchstens noch 25 % des Ursprungswert beträgt und
    - die Kraft bei einer Dehnung um 50 % nach 3 Minuten höchstens noch 40 % des Ursprungswert beträgt.

2. Abdeckklebeband nach Anspruch 1, **dadurch gekennzeichnet, dass** bei dem PVC-Trägermaterial die Kraft bei einer Dehnung um 10 % nach 3 Minuten höchstens noch 20 % und die Kraft bei einer Dehnung um 50 % nach 3 Minuten höchstens noch 35 % des Ursprungswert beträgt.

3. Abdeckklebeband nach Anspruch 1 oder 2, **dadurch gekennzeichnet, dass** der Träger 30 bis 33 Gew.-Teile Polymerweichmacher auf 100 Gew.-Teile PVC-Polymer enthält.

4. Abdeckklebeband nach zumindest einem der Ansprüche 1 bis 3, **dadurch gekennzeichnet, dass** das Trägermaterial aus einer PVC-Polymermischung aus 80 bis 50 Gew.-Teile eines Standard-PVCs und 20 bis 50 Gew.-Teile eines PVCs mit einem K-Wert < 60, so das sich ein mittleren K-Wert kleiner 63 für die PVC-Polymermischung ergibt.

5. Abdeckklebeband nach zumindest einem der vorherigen Ansprüche, **dadurch gekennzeichnet, dass** die Schlagzugzähigkeit längs zur Maschinenrichtung kleiner 1000 kJ/m$^2$, insbesondere kleiner 700 kJ/m$^2$ ist.

6. Abdeckklebeband nach zumindest einem der vorherigen Ansprüche, **dadurch gekennzeichnet, dass** das PVC-Trägermaterial 2 bis 10 Gew.-Teile mindestens eines Additivs wie vernetztes PVC-Polymer und/oder eines mit PVC unverträglichen Polymers auf 100 Gew.-Teile PVC-Polymer enthält.

7. Abdeckklebeband nach zumindest einem der vorherigen Ansprüche, **dadurch gekennzeichnet, dass** die Trägerfolie mit einer Selbstklebemasse auf Basis von Polyisopren, Polyisobutylen oder Polyacrylat beschichtet ist.

8. Abdeckklebeband nach zumindest einem der vorherigen Ansprüche, **dadurch gekennzeichnet, dass** die Trägerfolie mit einer Primer- und Haftklebeschicht beschichtet ist.

9. Abdeckklebeband nach zumindest einem der vorherigen Ansprüche, **dadurch gekennzeichnet, dass** bei Anwendung bis zu 160 °C ein rückstandsfreies Abziehen möglich ist.

10. Abdeckklebeband nach zumindest einem der vorherigen Ansprüche, **dadurch gekennzeichnet, dass** die Klebkraft im Bereich von 2,0 bis 4,8 N/cm liegt.

11. Verwendung eines Abdeckklebebands nach zumindest einem der vorherigen Ansprüche zum Lackieren von Fahrzeugen und Fahrzeugteilen.

12. Verwendung eines Abdeckklebebands nach zumindest einem der vorherigen Ansprüche zum Maskieren von Fensterflanschen während des Lackierprozesses.

**Europäisches Patentamt**

**EUROPÄISCHER RECHERCHENBERICHT**

Nummer der Anmeldung

EP 05 10 7098

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2004/001948 A1 (MUSSIG BERNHARD ET AL) 1. Januar 2004 (2004-01-01) * Ansprüche; Beispiele * ----- | 1-12 | C09J7/02 |
| D,X | DE 101 51 818 A1 (TESA AG) 22. Mai 2003 (2003-05-22) * Ansprüche; Beispiele 3,4 * ----- | 1-12 | |
| X | WO 2004/003060 A (AVERY DENNISON CORPORATION) 8. Januar 2004 (2004-01-08) * Seite 21, Zeile 17 - Seite 22, Zeile 18; Beispiel 1 * ----- | 1-12 | |

**RECHERCHIERTE SACHGEBIETE (IPC)**

C09J

Der vorliegende Recherchenbericht wurde für alle Patentansprüche erstellt

| Recherchenort | Abschlußdatum der Recherche | Prüfer |
|---|---|---|
| München | 17. November 2005 | Baekelmans, D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 05 10 7098

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-11-2005

| Im Recherchenbericht angeführtes Patentdokument | | Datum der Veröffentlichung | Mitglied(er) der Patentfamilie | | Datum der Veröffentlichung |
|---|---|---|---|---|---|
| US 2004001948 | A1 | 01-01-2004 | DE<br>EP<br>JP | 10218686 A1<br>1362881 A2<br>2003335911 A | 27-11-2003<br>19-11-2003<br>28-11-2003 |
| DE 10151818 | A1 | 22-05-2003 | JP<br>US | 2003201453 A<br>2003077439 A1 | 18-07-2003<br>24-04-2003 |
| WO 2004003060 | A | 08-01-2004 | AU<br>EP | 2003238272 A1<br>1517945 A2 | 19-01-2004<br>30-03-2005 |

EPO FORM P0461

Für nähere Einzelheiten zu diesem Anhang : siehe Amtsblatt des Europäischen Patentamts, Nr.12/82